# FASCICULE DE BREVET EUROPEEN

(11) **EP 2 336 031 B1**
(45) Date de publication et mention de la délivrance du brevet: **06.06.2012**
(21) Numéro de dépôt: 10194920.4
(22) Date de dépôt: 14.12.2010
(51) Int. Cl.: B64G 1/22

(54) **Dispositif de déploiement et de pointage d'éléments structurants dans un environnement spatial**
Vorrichtung zur Entfaltung und Ausrichtung von Strukturelementen in einer Weltraumumgebung
Device for the deployment and pointing of structure elements in a spatial environment

(30) Priorité: 18.12.2009 FR 0906177
(43) Date de publication de la demande: 22.06.2011
(73) Titulaire: Thales, 92200 Neuilly Sur Seine (FR)
(72) Inventeur: Chaix, Rodolphe, 83390, CUERS (FR); Daval, Christian, 06530, SAINT CESAIRE SUR SIAGNE (FR)
(74) Mandataire: Esselin, Sophie

(56) Documents cités:
- FR-A1- 2 088 280
- FR-A1- 2 354 925
- US-A- 5 319 905
- US-A- 5 620 529
- US-A- 5 833 176

## Description

La présente invention concerne le domaine des dispositifs articulés destinés à être placés sur une charge utile mise en orbite terrestre. Plus particulièrement, l'invention se rapporte au domaine des satellites comprenant des structures à déployer tels que des générateurs solaires. Enfin l'invention concerne les dispositifs ayant deux phases de vies dont la première phase comprend le déploiement d'éléments structurants dans l'espace et dont la seconde phase de vie comprend le pointage de ces éléments vers une cible pendant le vol en orbite

Actuellement, lorsque les satellites sont placés en orbite autour de la terre, ils nécessitent une phase de déploiement des éléments structurants porteurs de générateurs solaires ou d'antennes selon la mission. Cette phase est particulièrement critique car elle conditionne la réussite de la mission.

L'ensemble des éléments structurants est une structure qui forme un bras articulé. Notamment, parmi ces éléments structurants, il y a des fourches et/ou des panneaux solaires et/ou des antennes. Ces éléments sont joints par des articulations de l'emplanture jusqu'au bout du bras articulé.

Afin d'obtenir une posture totalement déployée des éléments structurants et de minimiser d'une part la répartition de la force motrice sur les éléments structurants et d'autre part les interférences cinématiques entre les éléments, il est souvent nécessaire d'utiliser un système de conjugaison permettant de coordonner et d'articuler de manière homogène le déploiement des éléments structurants.

La structure initialement repliée se déploie selon une cinématique et une vitesse déterminée. Tous les angles entre deux éléments structurants consécutifs s'ouvrent selon une loi déterminée par le mécanisme de conjugaison.

Un système de conjugaison connu utilise des poulies positionnées sur chacune des articulations et des câbles reliant les poulies permettant de répercuter les efforts entre les éléments structurants lors du déploiement.

Afin d'activer la première articulation qui comprend une première poulie, un moteur est généralement situé à l'emplanture, c'est-à-dire au niveau de la première articulation qui joint la charge utile du satellite et le premier élément structurant.

Un système de déploiement selon le préambule de la revendication 1 est aussi décrit dans le document US 5833176.

Lors du déploiement, certaines structures disposent, outre le système de conjugaison, d'un système de verrouillage des articulations entre elles. Le système de verrouillage permet de bloquer les articulations et donc les conjugaisons liées aux articulations pour la suite de la mission du satellite qui n'aura plus besoin de déployer ou de replier ces éléments structurants. Le verrouillage permet de passer d'une première phase de vie du satellite correspondant à la mise sur orbite et au déploiement de ses éléments structurants à une seconde phase de vie correspondant à la mission elle-même, dans laquelle les éléments structurants auront une mobilité propre.

Une fois la structure déployée, il peut être nécessaire, tout au long de la durée de vie du satellite, de pointer les éléments structurants vers une cible. Dans cette seconde phase de vie, le déploiement de la structure étant réalisé, il est nécessaire selon les missions de pointer la structure selon une direction d'une cible. Par exemple, il peut s'agir du soleil, si la structure comprend des générateurs solaires tels que des panneaux solaires, où bien d'une région géographique sur la planète dans le cas d'une antenne ou bien un point précis de l'espace selon les besoin.

De manière à sécuriser la phase de déploiement, généralement elle est dissociée de la phase correspondante à la mission. Actuellement, les moyens moteurs utilisés dans chaque phase de vie sont cloisonnés par sécurité. Notamment, le moteur qui permet d'articuler les éléments structurants pour pointer une cible est différent du moteur qui permet le déploiement de la structure. Les moyens moteurs sont différents selon la phase de vie car les mécanismes d'articulations avec et sans conjugaison des deux phases sont différents.

Généralement, la liaison pivot de l'emplanture est fixe après le déploiement, on dit qu'elle est verrouillée. Il existe dans l'art antérieur, à l'emplanture de la charge utile, une liaison pivot permet d'orienter la totalité de la structure déployée, la structure comprenant tous les éléments structurants solidaires lorsqu'ils sont verrouillés entre eux.

Un inconvénient des solutions de l'art antérieur est l'encombrement et à la masse d'un second moteur pour pointer la structure déployée vers une cible.

Un second inconvénient est que le système de verrouillage bloque la conjugaison des articulations et verrouille la structure. Le mécanisme de poulie permettant de déployer les éléments structurants n'étant alors plus utilisé. Le second moteur active alors des articulations de la structure en vue d'en faire pivoter toute une partie. Cette solution implique qu'il est nécessaire de doubler le système de conjugaison verrouillé par un autre système permettant d'entrainer la rotation d'une partie de la structure en vue de la faire pivoter vers une cible.

Un but de l'invention est de pallier aux inconvénients précités.

Un but de l'invention est de mutualiser les moyens moteurs dans les deux phases de vie. En particulier, l'invention propose de définir deux modes de motricité de la conjugaison pour chacun des phases de vie. L'invention comprend un système de verrouillage/déverrouillage permettant de passer d'un premier mode de conjugaison comprenant une première loi d'articulation de la structure pour le déploiement à un second mode de conjugaison comprenant une seconde loi d'articulation de la structure pour le pointage de la structure.

Avantageusement, le dispositif de déploiement et de pointage d'éléments structurants destinés à être mis en orbite terrestre comprend :
■ une pluralité d'éléments structurants reliés entre eux par des articulations, l'ensemble formant un bras articulé relié à une charge utile par une emplanture ;
   ■ les articulations comprenant au moins une liaison pivot permettant de faire pivoter deux éléments structurants consécutifs l'un par rapport à l'autre,
   ■ l'emplanture comprenant une liaison pivot permettant de faire pivoter le premier élément structurant par rapport à la charge utile ;
■ un système de verrouillage/déverrouillage comprenant au moins un dispositif de verrouillage disposé sur une articulation permettant le verrouillage d'au moins une liaison pivot ;
■ un système de conjugaison comprenant un premier mode de conjugaison permettant le pivotement de chacun des éléments structurants selon une loi de rotation prédéfinie.
■ au moins un moteur permettant d'activer le système de conjugaison, le dit moteur étant positionné au niveau d'une articulation, appelée articulation motrice.

Avantageusement, le système de verrouillage permet de désactiver le premier mode de conjugaison et d'activer un second mode de conjugaison, le second mode de conjugaison permettant de conserver le déverrouillage d'une liaison pivot d'au moins une articulation, notée articulation de pointage, la rotation du moteur entrainant la rotation de l'articulation de pointage.

Avantageusement, le système de conjugaison comprend :
■ une pluralité de poulies reliées par des câbles, dont une poulie est activée par le moteur, notée poulie motrice et ;
■ des moyens de fixation des poulies aux éléments structurants, chacune des articulations comprenant au moins deux poulies dont l'une est fixée à un élément structurant amont, notée poulie amont, et l'autre est fixée à un élément structurant aval, notée poulie aval, l'emplanture comprenant une poulie fixée au premier élément structurant.

Avantageusement, le système de verrouillage/déverrouillage comprend au moins un dispositif de verrouillage/ déverrouillage d'une poulie de conjugaison par rapport à l'articulation.

Avantageusement, l'articulation comprenant le moteur, ainsi que toutes les articulations situées entre l'articulation comprenant le moteur et l'articulation de pointage comprennent un dispositif de verrouillage/déverrouillage d'une poulie, l'articulation de pointage comprenant un dispositif de verrouillage/déverrouillage d'une poulie uniquement sur la poulie aval.

Avantageusement, toutes les articulations ont un dispositif de verrouillage/déverrouillage d'une liaison pivot d'une articulation excepté l'articulation de pointage.

Avantageusement, l'engagement du second mode de conjugaison entraine :
■ le verrouillage d'une pluralité de liaisons pivots ;
■ le déverrouillage des poulies de chaque articulation comprise entre l'articulation comprenant le moteur, notée articulation motrice et l'articulation de pointage
■ la conservation du verrouillage de la poulie amont de l'articulation de pointage ;
■ le déverrouillage de la poulie aval de l'articulation de pointage ;
■ la conservation du déverrouillage de la liaison pivot de l'articulation de pointage.

Avantageusement, l'engagement du second mode de conjugaison entraine simultanément :
■ le verrouillage de la liaison pivot de l'articulation motrice ;
■ le déverrouillage de la poulie motrice par rapport à l'articulation.

Avantageusement, le dispositif de verrouillage/déverrouillage d'une liaison pivot d'une articulation comprend au moins un cliquet et un nez de retour.

Avantageusement, le dispositif de verrouillage de la liaison pivot de l'articulation moteur comprend au moins un cliquet, un nez de retour et un bras de maintien.

Avantageusement, le dispositif de verrouillage de la liaison pivot de l'articulation de pointage comprend un doigt de verrouillage permettant la libération de la poulie à un angle déterminé.

Avantageusement, les éléments structurants comprennent des fourches et des générateurs solaires.

Avantageusement, le moteur et la poulie motrice sont disposés à l'emplanture.

D'autres caractéristiques et avantages de l'invention apparaîtront à l'aide de la description qui suit, faite en regard des dessins annexés qui représentent :
- la figure 1 : un système de conjugaison ;
- la figure 2 : une structure articulée déployée selon le dispositif de l'invention ;
- les figures 3A, 3B, 3C, 3D : la structure selon le dispositif de l'invention dans sa phase de vie de pointage selon différents modes de verrouillage ;
- la figure 4 : un dispositif de verrouillage/déverrouillage des articulations et de motricité de conjugaison de l'invention ;
- la figure 5 : une première vue 3D d'une articulation à l'emplanture d'un bras de satellite selon l'invention ;
- la figure 6 : une seconde vue 3D d'une articulation à l'emplanture d'un bras de satellite selon l'invention ;
- la figure 7 : une vue 3D d'une articulation de pointage d'un bras de satellite selon l'invention.

On appelle "structure" dans la suite de la description, le bras articulé comprenant une pluralité d'éléments structurants comprenant des fourches, des générateurs solaires, des articulations, un système de verrouillage/déverrouillage et un système de conjugaison.

Dans la suite on appelle le système de verrouillage/déverrouillage, le système qui comprend une pluralité de dispositifs de verrouillage/déverrouillage positionnés aux articulations du bras articulés.

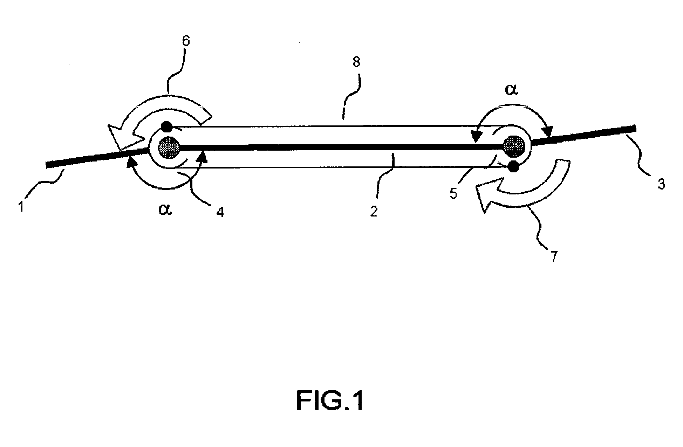

La figure 1 représente un système de conjugaison entre trois éléments structurants 1, 2, 3 liés deux à deux par des articulations 4, 5. Chaque articulation 4, 5 comprend une liaison pivot permettant de faire pivoter deux éléments structurants l'un par rapport à un autre. Par ailleurs, les articulations 4, 5 comprennent chacune une poulie. Un câble 8 est enroulé autour de chacune des deux poulies de chaque articulation 4, 5.

Sous l'impulsion d'une force motrice actionnant la première poulie en rotation, le câble entraine la seconde poulie de l'articulation 5.

Lors de la phase de déploiement de la structure, le système de conjugaison permet sous l'impulsion de la force motrice un déploiement coordonné des éléments structurants. Le déploiement a lieu jusqu'à ce que les éléments structurants soient positionnés selon le même axe.

La première poulie de l'articulation 4 est solidaire de la liaison pivot de l'élément structurant de cette même articulation, la rotation de la première poulie entraine la rotation de l'élément structurant 2 vis-à-vis de l'élément structurant 1.

La seconde poulie est solidaire de la liaison pivot de l'articulation 5 de l'élément structurant 3. La rotation de la seconde poulie entraine la rotation de l'élément structurant 3 vis-à-vis de l'élément structurant 2.

La valeur absolue de l'angle α entre l'élément structurant 2 et l'élément structurant 1 dans le sens direct et égale à la valeur absolue de l'angle entre l'élément structurant 2 et de l'élément structurant 3 dans le sens direct.

Le câble 8 entraine la liaison pivot de l'articulation 5 et fait pivoter l'élément structurant 3 d'un angle α identique.

Le système de conjugaison par poulies et par câble oppose les sens des angles de deux articulations consécutives. On appelle cette conjugaison, le premier mode de conjugaison dans la suite de la description. Il correspond à la conjugaison des angles liés entre eux entre les différents éléments structurants pour déployer la structure. Il est utilisé dans une première phase de vie du satellite qui correspond au déploiement de ses bras.

Le système de conjugaison de la figure 1 nécessite un dispositif de verrouillage entre la liaison pivot de l'articulation 4 de l'élément structurant 1 et la poulie de cette même articulation.

Le déploiement étant réalisé, une seconde phase de vie est alors enclenchée, il s'agit de la phase de pointage qui correspond à un autre mode de fonctionnement du dispositif de l'invention. Un second mode de conjugaison est alors enclenché dès que le système de verrouillage/déverrouillage s'enclenche après le déploiement.

Le dispositif de verrouillage/déverrouillage actionne de manière à ne plus rendre solidaire la liaison pivot de l'articulation 4 de l'élément structurant 1 et la poulie de la même articulation. De ce fait la poulie n'entraine pas la liaison pivot. Le déverrouillage de la poulie vis-à-vis de la liaison pivot entraine un verrouillage de la liaison pivot liant l'élément structurant 1 et l'élément structurant 2 qui sont alors fixes l'un par rapport à l'autre et la poulie est libre.

La rotation de la poulie de l'articulation 4 entraine alors la poulie de l'articulation 5. Si la poulie de l'articulation 5 est liée à la liaison pivot de l'articulation 5, alors l'élément structurant 3 est entrainé en rotation autour de la liaison pivot de l'articulation 5.

La première phase de vie entre les éléments structurants est stoppée par le système de verrouillage/déverrouillage qui rompt le principe de conjugaison de la première phase. Ce dernier système de verrouillage/déverrouillage enclenche une seconde phase de vie qui permet de faire pivoter un élément structurant 3 autour de l'articulation 5, la rotation étant engagée par le biais de la même force motrice que celle du déploiement appliquée sur la liaison pivot de l'articulation 4.

Dans ce cas, le dispositif de l'invention avec un système de verrouillage/déverrouillage activable, permet de passer d'une première phase de vie de déploiement à une deuxième phase de vie de pointage en utilisant la même force motrice lors d'un déploiement, les mêmes éléments structurants et les mêmes éléments de conjugaisons.

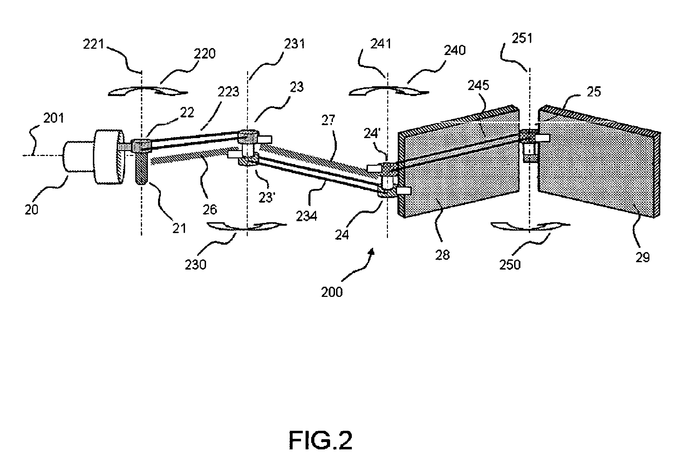

La figure 2 représente un dispositif de déploiement et de pointage d'éléments structurants d'un satellite selon l'invention.

Dans un mode de réalisation, de manière à mutualiser le moteur pour les différentes phases de vie, le dispositif de l'invention comprend un des dispositifs de verrouillage/déverrouillage positionnés aux articulations du bras. Il y a d'une part des dispositifs de verrouillage/déverrouillage des poulies et d'autre part des dispositifs de verrouillage/déverrouillage des liaisons pivots permettant de réaliser le déploiement de toute la structure dans une première phase de vie et le pointage de toute ou une partie de la structure déployée dans une seconde phase de vie qui correspond à la mission du satellite.

Dans la première phase de vie, la structure est initialement repliée. Elle se déploie sous l'impulsion du second moteur et du système de conjugaison dans son premier mode. La poulie 22 est initialement solidaire de la partie fixe satellite. Le moteur est solidaire d'un coté de la poulie 22 et solidaire de l'élément structurant 26 pour l'autre coté. Le moteur a le même axe de rotation 221 que la liaison pivot 21. Le moteur entraine la rotation de l'élément structurant 26.

Le moteur 21 est solidaire de la poulie 22 aux démultiplicateurs près.

Lorsque le moteur 21 est en marche, il permet de faire tourner la poulie 22 par rapport au corps structurant 26. La poulie 22 étant solidaire de la partie fixée au satellite 1, le corps 26 se déploie autour de l'axe 221

La rotation de la poulie 22 par rapport a l'élément structurant 26 entraine à l'aide du câble 223, la rotation de la poulie 23 qui entraine elle-même la rotation de l'élément structurant 27 lié solidairement à la poulie 23.

La rotation de l'élément structurant 26 lié solidairement à la poulie 23' entraine la rotation de la poulie 23'. La rotation de la poulie 23' entraine le câble 234 qui entraine lui-même la poulie 24 liée solidairement à l'élément structurant 28. La structure 28 est donc entrainée en rotation sous l'impulsion de la rotation de la poulie 24. La rotation de la poulie 24' est alors en rotation sous l'impulsion de la rotation de la structure 28 et entraine à son tour par l'intermédiaire du câble 245 la rotation de la poulie 25 qui est liée solidairement à l'élément structurant 29 qui pivote autour de l'axe 251.

Les éléments structurants 26, 27, 28 et 29, étant chacun solidaire d'une poulie, se déploient par action du moteur de manière homogène sous la contrainte du système de conjugaison.

Chacun des éléments structurants pivote autour de l'axe de l'articulation qui la sépare de l'élément structurant précédent ou suivant.

L'élément structurant 26 pivote autour de l'axe 221, l'élément structurant 27 pivote autour de l'axe 231, l'élément structurant 28 pivote autour de l'axe 241 et l'élément structurant 29 pivote autour de l'axe 251.

Les valeurs absolues des angles de rotations 220, 230, 240 et 250 sont égales grâce au mécanisme de conjugaison dans son premier mode assuré par les poulies et les câbles et la force motrice. En revanche, les angles sont deux à deux de sens opposés. L'angle 220 est indirect, l'angle 230 est direct, l'angle 240 est indirect et enfin l'angle 250 est direct.

Lorsque le déploiement est terminé, la première phase de vie est terminée. Une fois les éléments structurants déployés, ils sont dans le même axe. Les angles entre chaque éléments structurants est de 180° dans l'exemple de la figure 2.

L'invention comprend des dispositifs de verrouillage/déverrouillage au niveau des articulations permettant de verrouiller une partie des articulations lorsque le déploiement est terminé, clôturant ainsi la première phase de vie du satellite. Le second moteur est également utilisé pour la seconde phase de vie.

Dans chaque articulation la poulie et la liaison pivot peuvent être indépendamment verrouillés ou déverrouillés. Un mode de réalisation de l'invention permet de lier le verrouillage d'une poulie en rotation au déverrouillage d'une liaison pivot.

Plusieurs variantes de réalisations sont possibles selon la mission et selon quelle partie de la structure on souhaite faire pivoter vers une cible.

Il s'agit de configurer le système de verrouillage/déverrouillage pour qu'une articulation déverrouille sa liaison pivot qui sera entrainée par la force du second moteur. Le système de verrouillage/déverrouillage permet donc un second mode de conjugaison dans lequel une rotation de la poulie permet la rotation d'une liaison pivot prédéfinie.

Le second moteur 21 permet de faire pivoter la structure comprenant une pluralité d'éléments structurants soit autour d'un axe 221, soit autour d'un axe 231 ou encore autour d'un axe 241 lorsqu'il est nécessaire d'orienter une partie de la structure 200 et en particulier les générateurs solaires 28 et 29 vers une cible désignée. L'invention permet de disposer d'un système de verrouillage/déverrouillage permettant de faire pivoter une partie, située à l'extrémité de la structure, non pas forcément à l'emplanture mais au niveau d'une articulation éloignée de la charge utile. Cette configuration permet par exemple de d'affranchir de l'ombre du satellite qui pourrait couvrir les générateurs solaires. Un autre exemple permet de limiter les variations d'inertie propre liées aux pointage des générateurs solaires.

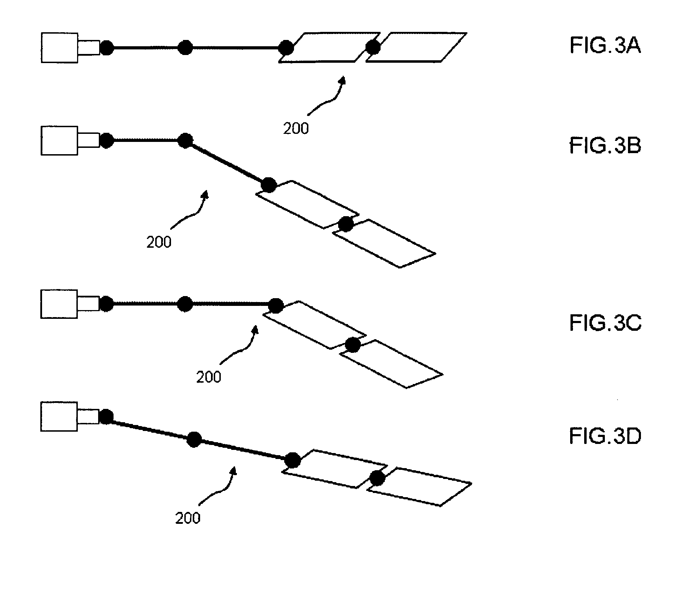

La figure 3A, 3B, 3C et 3D représentent différentes configurations de pointage possibles selon la configuration du système de verrouillage/déverrouillage.

La figure 3A représente la structure lorsqu'elle est entièrement déployer, elle est alors prête à entamer sa seconde phase de vie.

La figure 3B représente la structure lorsqu'elle pointe une cible, le pivotement est réalisé entre la première et la seconde fourche.

La figure 3C représente la structure lorsqu'elle pointe une cible, le pivotement est réalisé entre la seconde fourche et le premier générateur solaire.

La figure 3D représente la structure lorsqu'elle pointe une cible, le pivotement est réalisé au niveau de l'emplanture, entre la charge utile du satellite et la première fourche.

Le système de verrouillage/déverrouillage peut comprendre plusieurs modes de mise en oeuvre selon les variantes de réalisation et selon la disposition des dispositifs de verrouillage/déverrouillage au niveau des articulations.

Dans une première variante de réalisation, un dispositif de verrouillage/déverrouillage déverrouille la poulie avec l'articulation de l'emplanture tout en verrouillant sa liaison pivot. Le moteur reste solidaire de la poulie et se désolidarise de la liaison pivot avec l'élément structurant 26. Le moteur n'entraine plus la rotation de l'élément structurant 26 qui est maintenant fixe mais uniquement la poulie 22.

Le moteur actionne la poulie 22. La poulie 22 en pivotant actionne le câble 223 autour de la poulie 23 qui elle-même se met en mouvement de rotation.

Au niveau de la seconde articulation 232, il y a deux poulies :
■ une première poulie 23 à une première extrémité de l'articulation 232 reliée à la poulie 22 par l'intermédiaire du câble 223 et ;
■ une seconde poulie 23' située à l'autre extrémité de la l'articulation 232.

Dans cette première variante de ce premier mode, un dispositif de verrouillage/déverrouillage permet le verrouillage de l'articulation 232 tout en déverrouillant les poulies 23 et 23' de l'articulation. Dans ce cas, suite au déploiement, la liaison entre l'élément 26 et l'élément 27 est une liaison fixe. Il n'y a donc plus de pivotement de cette articulation.

La rotation de la poulie 23 entraine la rotation de la poulie 23' autour de l'axe 231. Le câble 234 entraine à son tour la rotation de la poulie 24 qui est déverrouillée avec la poulie 24'. La poulie 24' est liée à la liaison pivot de l'élément structurant 28.

Les deux générateurs solaires 28, 29 sont solidaires suite au déploiement de la structure, la liaison pivot liant les éléments structurant 28 et 29 étant verrouillée.

L'élément structurant 28 est donc engagé en rotation autour de l'axe 241. La structure alors composée des deux générateurs solaires 28 et 29 et la poulie 25 pivote sous l'action du moteur.

Cette configuration correspond au cas de figure de la figure 3C.

Une seconde variante de ce premier mode est d'activer un dispositif de verrouillage/déverrouillage qui permet à la fin de la phase de vie du déploiement de déverrouiller la poulie 23' de l'articulation 232 sans verrouiller l'articulation. Dans cette variante, la rotation du moteur 21 aura donc pour effet de faire tourner uniquement l'articulation 232 autour de son axe 231 par le biais de la poulie 22, la conjugaison 223 et la poulie 23. Suite au déploiement les éléments 27, 28 et 29 sont liés de manière fixe par le dispositif de verrouillage/déverrouillage qui a supprimé les liaisons pivots entre les éléments structurants.

Ce cas de figure correspond au cas de la figure 3B.

Une troisième variante est de ne pas enclencher le déverrouillage au niveau de l'emplanture entre la liaison pivot de l'élément structurant et 26 et le moteur. Ce qui permet d'actionner le pivotement de la structure par simple action sur le moteur. Les éléments structurants 26, 27, 28 et 29 étant, dans ce cas, liés par de liaisons fixes entre eux. La structure pivote alors autour de l'axe 221 et correspond au cas de figure de la figure 3D.

Dans une quatrième variante de réalisation. Le dispositif une fois déployé permet d'activer le verrouillage de l'articulation 232 et 233 et de déverrouiller les poulies 23,23',24 et 24'. Dans ce cas, suite au déploiement, la liaison entre l'élément 26 et l'élément 27 est fixe et la liaison entre l'élément 27 et 28 est fixe. Il n'y a donc plus de pivotement de ces articulations.

La rotation du moteur 21 entraine la rotation de la poulie 22 qui entraine la rotation de la poulie 23 au travers de la conjugaison 223.

La rotation de la poulie 23 entraine la rotation de la poulie 23' autour de l'axe 231. Le câble 234 entraine à son tour la rotation de la poulie 24 entraine la rotation de la poulie 24'. La rotation de la poulie 24' entraine le câble 245 qui entraine à son tour la poulie 25. La poulie 25 dans cette variante est solidaire le la liaison pivot appartenant à l'élément structurant 29.

En conséquence, le panneau 29 est entrainé en rotation sous l'impulsion du moteur.

Les deux générateurs solaires 28, 29 sont alors plus dans le même plan. Ce cas de figure est opérationnellement peu utilisé, mais l'invention permet toutes les configurations possibles selon la configuration des dispositifs de verrouillage/déverrouillage des poulies et des liaisons pivots.

L'élément structurant 29 est donc engagé en rotation autour de l'axe 251. La structure alors composée d'un seul générateur solaire 29 pivote sous l'action du moteur.

D'autres combinaisons de ces variantes sont aussi possibles selon le même principe de fonctionnement de verrouillage/ déverrouillage.

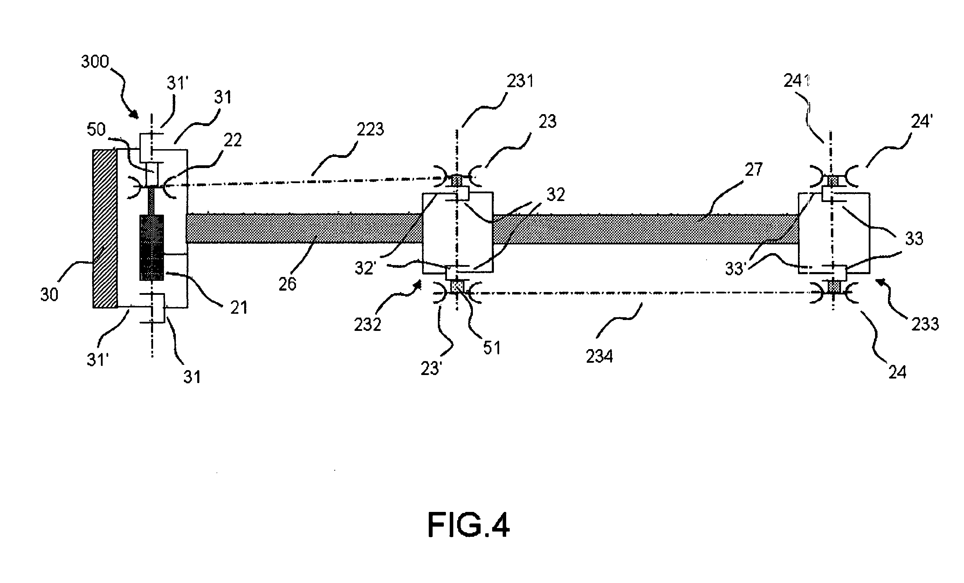

La figure 4 représente en détail le mécanisme du second mode de conjugaison et de verrouillage selon l'invention.

La poulie 22 en rotation entrainée par les moyens moteurs 21 permet de faire pivoter la poulie 23.

Plusieurs variantes énoncées aux figures 3A, 3B, 3C et 3D de l'invention permettent de faire pointer la structure selon un axe privilégié.

Un mode particulier de réalisation de l'invention permet un verrouillage de la liaison pivot 31 et 31' suite à la phase de déploiement de la structure. Le verrouillage de la liaison 31, 31' rend la charge utile du satellite 30 solidaire de l'élément structurant 26. La liaison pivot 31, 31' est donc une liaison fixe.

Le moteur 21 entraine alors uniquement la poulie 22.

L'invention permet simultanément de verrouiller la liaison pivot 31, 31' tout en déverrouillant la poulie 22 vis-à-vis de l'articulation par un dispositif de verrouillage/déverrouillage 50. La poulie 22 pivote sans entrainer le pivotement de la liaison pivot de l'articulation.

L'élément structurant 26 étant alors fixe par rapport à la charge utile 30, la poulie 23' doit être désolidarisé de l'élément structural 26 pour autoriser la rotation autour de l'axe 231 sans entraîner la conjugaison 234. Cette fonction est assurée par le dispositif verrouillage/déverrouillage 51.

Dans ce cas de figure, le câble 223 entraine la poulie 23 solidaire de l'articulation et de la liaison pivot 32. L'élément structurant 27 pivote alors autour l'axe 231. Cette configuration permet d'articuler la structure comprenant les éléments 27 et les suivants après l'articulation 32, 32'.

Dans ce mode de réalisation la structure pivote donc autour de l'axe 231.

Les articulations suivantes, notamment l'articulation 33, 33' sont verrouillés dans ce mode de réalisation. Cette configuration permet d'orienter la structure de manière à la pointer vers une cible souhaitée.

Dans un autre mode de réalisation, un dispositif de verrouillage/déverrouillage peut être activé au niveau des articulations 32 et 32' qui forment alors une liaison fixe. Dans ce cas, en gardant la configuration de verrouillage de l'articulation à l'emplanture, l'invention permet de faire pivoter la structure au niveau de l'articulation 33, 33'. Le déverrouillage de la poulie 22 au niveau de l'emplanture entrainant le déverrouillage de la liaison pivot 33, 33'.

Dans un mode de réalisation, un dispositif de verrouillage /déverrouillage peut être réalisé à partir d'une came et d'un doigt de blocage.

Un avantage de l'invention est de permettre l'utilisation d'un unique moteur et d'une unique conjugaison pour la phase de vie correspondant au déploiement et la phase de vie correspond au pointage de la structure.

Un avantage de cette solution est de minimiser les coûts, d'alléger le dispositif de l'invention et plus particulièrement le satellite.

Un avantage est également la simplicité de mise en oeuvre et la possibilité de configurer le système de verrouillage/déverrouillage en regard de la mission du satellite.

Enfin un autre avantage est la robustesse du système, en mutualisant les moyens moteurs, les risques de pannes sont réduits.

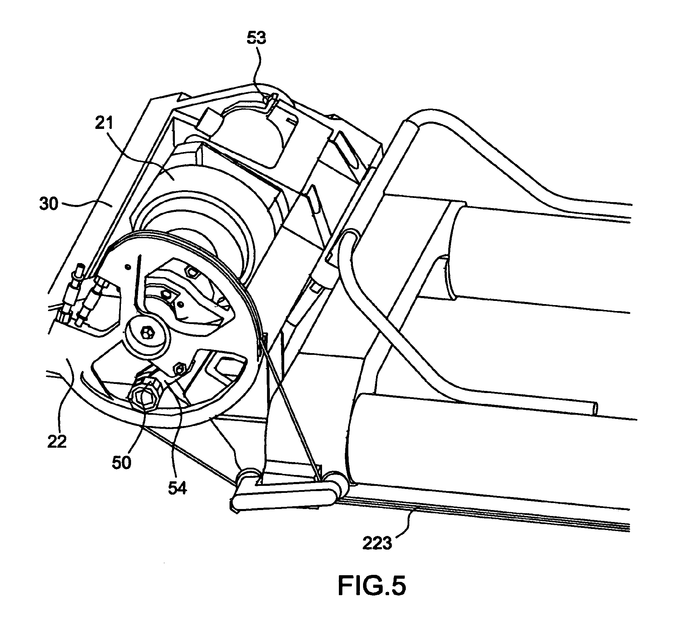

La figure 5 représente une vue 3D d'une articulation à l'emplanture d'un bras déployable d'un satellite selon l'invention.

Une emplanture permet de faire la liaison avec le satellite. Un premier dispositif de verrouillage 53 au niveau d'une première partie de l'emplanture permet de créer une liaison fixe avec la partie satellite 30. Une seconde partie de l'emplanture est située de l'autre coté de l'articulation, du même coté que la poulie 22 qui entraine les câbles 223.

Dans l'exemple de la figure 5 la seconde partie de l'emplanture comprend un système de verrouillage/déverrouillage 50 actionnable à partir d'un bras de maintien qui s'emboite dans la partie centrale de la poulie 22. Le système de verrouillage/ déverrouillage 50 permet le verrouillage de l'articulation et le déverrouillage de la poulie après la première phase de vie.

Le bras de maintien de la poulie est solidaire de l'axe d'un cliquet de verrouillage de l'articulation, ce dernier n'étant pas représenté sur la figure 5.

Lorsque le cliquet verrouille l'articulation en tournant sur son axe, il permet d'entrainer en rotation le bras de maintien 54 de la poulie. En conséquence, il permet de désolidariser la poulie 22 de l'articulation.

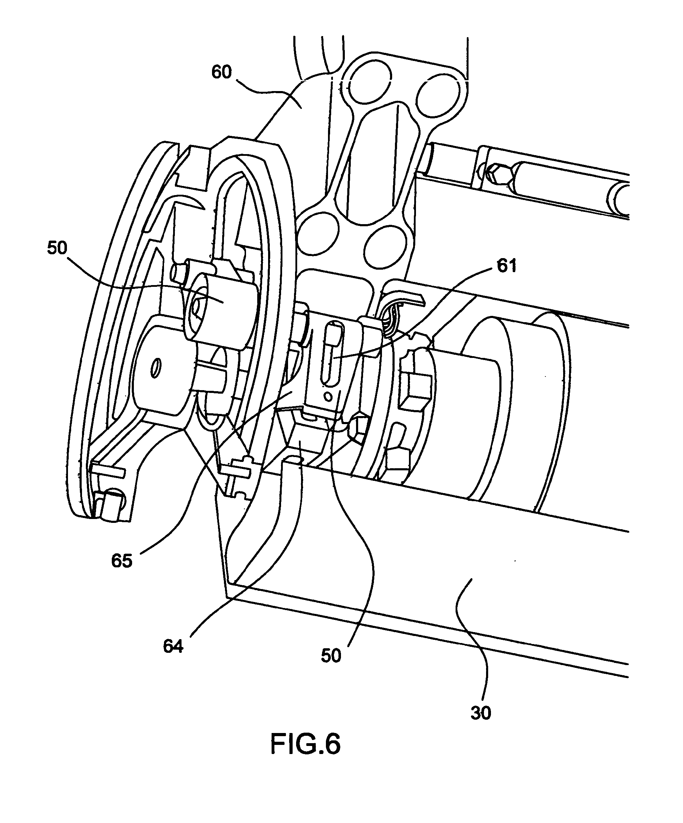

La figure 6 représente une autre vue 3D de la même articulation de la figure 5. Le système de verrouillage/déverrouillage 50 comprend un doigt de verrouillage 65 et un cliquet 61.

Dans cette vue, la partie fixe 30 du satellite est située en dessous sur la figure 6.

Lorsque le cliquet tourne autour de son axe, il vient se mettre en opposition au déplacement d'un nez de retour 64 de la partie mobile de l'articulation. Le cliquet permet de verrouiller alors l'articulation et en tournant il libère simultanément la poulie.

Un avantage est que le verrouillage de l'articulation et le déverrouillage de la poulie s'effectuent simultanément.

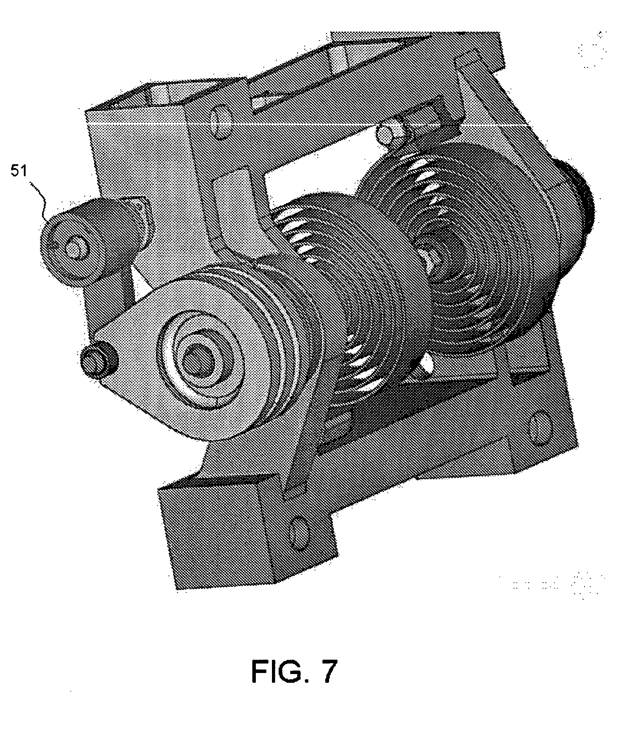

La figure 7 représente l'articulation 232 qui joint deux éléments structurants sur le bras du satellite. On appelle également cette articulation une articulation de pointage. Le système de verrouillage/ déverrouillage 51 permet de déverrouiller la poulie par rapport à l'articulation. Cette configuration permet le pointage de la partie structurante 27 à partir de la conjugaison 234.

## Revendications

1. Dispositif de déploiement et de pointage d'éléments structurants (26,27,28,29) destinés à être mis en orbite terrestre comprenant :
■ une pluralité d'éléments structurants (26,27,28,29) reliés entre eux par des articulations (232,233), l'ensemble formant un bras articulé relié à une charge utile (30) par une emplanture ;
■ les articulations (232, 233) comprenant au moins une liaison pivot permettant de faire pivoter deux éléments structurants (26,27,28,29) consécutifs l'un par rapport à l'autre,
■ l'emplanture comprenant une liaison pivot permettant de faire pivoter le premier élément structurant (26) par rapport à la charge utile (30) ;
■ un système de verrouillage/déverrouillage (50,51) comprenant au moins un dispositif de verrouillage disposé sur une articulation (232,233) permettant le verrouillage d'au moins une liaison pivot ;
■ un système de conjugaison comprenant un premier mode de conjugaison permettant le pivotement de chacun des éléments structurants (26,27,28,29) selon une loi de rotation prédéfinie.
■ au moins un moteur (21) permettant d'activer le système de conjugaison, le dit moteur étant positionné au niveau d'une articulation, appelée articulation motrice,
**caractérisé en ce que** le système de verrouillage (50,51) permet de désactiver le premier mode de conjugaison et d'activer un second mode de conjugaison, le second mode de conjugaison permettant de conserver le déverrouillage d'une liaison pivot d'au moins une articulation, notée articulation de pointage, la rotation du moteur (21) entrainant la rotation de l'articulation de pointage.

2. Dispositif de déploiement et de pointage d'éléments structurants (26,27,28,29) destinés à la mise en orbite terrestre selon la revendication 1, **caractérisé en ce que** le système de conjugaison comprend :
■ une pluralité de poulies (22,23,24,25) reliées par des câbles, dont une poulie (22) est activée par le moteur, notée poulie motrice et ;
■ des moyens de fixation des poulies (22,23,24,25) aux éléments structurants (26,27,28,29), chacune des articulations comprenant au moins deux poulies dont l'une (23,24) est fixée à un élément structurant amont, notée poulie amont, et l'autre (23',24') est fixée à un élément structurant aval, notée poulie aval, l'emplanture comprenant une poulie (22) fixée au premier élément structurant (26).

3. Dispositif de déploiement et de pointage d'éléments structurants (26,27,28,29) destinés à la mise en orbite terrestre selon l'une quelconque des revendications 1 à 2, **caractérisé en ce que** le système de verrouillage/déverrouillage (50,51) comprend au moins un dispositif de verrouillage/ déverrouillage d'une poulie de conjugaison par rapport à l'articulation.

4. Dispositif de déploiement et de pointage d'éléments structurants (26,27,28,29) destinés à la mise en orbite terrestre selon la revendication 3, **caractérisé en ce que** l'articulation comprenant le moteur (21), ainsi que toutes les articulations situées entre l'articulation comprenant le moteur et l'articulation de pointage comprennent un dispositif de verrouillage/déverrouillage d'une poulie, l'articulation de pointage (232) comprenant un dispositif de verrouillage/déverrouillage d'une poulie uniquement sur la poulie aval.

5. Dispositif de déploiement et de pointage d'éléments structurants (26,27,28,29) destinés à la mise en orbite terrestre selon l'une quelconque des revendications 3 à 4, **caractérisé en ce que** toutes les articulations ont un dispositif de verrouillage/déverrouillage d'une liaison pivot d'une articulation excepté l'articulation de pointage.

6. Dispositif de déploiement et de pointage d'éléments structurants (26,27,28,29) destinés à la mise en orbite terrestre selon la revendication 5, **caractérisé en ce que** l'engagement du second mode de conjugaison entraine :
■ le verrouillage d'une pluralité de liaisons pivots ;
■ le déverrouillage des poulies de chaque articulation comprise entre l'articulation comprenant le moteur, notée articulation motrice et l'articulation de pointage ;
■ la conservation du verrouillage de la poulie amont de l'articulation de pointage ;
■ le déverrouillage de la poulie aval de l'articulation de pointage ;
■ la conservation du déverrouillage de la liaison pivot de l'articulation de pointage.

7. Dispositif de déploiement et de pointage d'éléments structurants (26,27,28,29) destinés à la mise en orbite terrestre selon la revendication 6, **caractérisé en ce que** l'engagement du second mode de conjugaison entraine simultanément :
■ le verrouillage de la liaison pivot de l'articulation motrice ;
■ le déverrouillage de la poulie motrice par rapport à l'articulation.

8. Dispositif de déploiement et de pointage d'éléments structurants (26,27,28,29) destinés à la mise en orbite terrestre selon la revendication 3, **caractérisé en ce que** le dispositif de verrouillage/déverrouillage d'une liaison pivot d'une articulation comprend au moins un cliquet (61) et un nez de retour (64).

9. Dispositif de déploiement et de pointage d'éléments structurants destinés à la mise en orbite terrestre selon la revendication 3, **caractérisé en ce que** le dispositif de verrouillage de la liaison pivot de l'articulation moteur comprend au moins un cliquet (61), un nez de retour (64) et un bras de maintien (54).

10. Dispositif de déploiement et de pointage d'éléments structurants (26,27,28,29) destinés à la mise en orbite terrestre selon la revendication 3, **caractérisé en ce que** le dispositif de verrouillage de la liaison pivot de l'articulation de pointage comprend un doigt de verrouillage (65) permettant la libération de la poulie à un angle déterminé.

11. Dispositif de déploiement et de pointage d'éléments structurants (26,27,28,29) destinés à la mise en orbite terrestre selon l'une quelconque des revendications 1 à 10, **caractérisé en ce que** les éléments structurants (26,27,28,29) comprennent des fourches et des générateurs solaires.

12. Dispositif de déploiement et de pointage d'éléments structurants (26,27,28,29) destinés à la mise en orbite terrestre selon l'une quelconque des revendications 1 à 11, **caractérisé en ce que** le moteur (21) et la poulie motrice sont disposés à l'emplanture.

## Claims

1. A device for deploying and pointing structural elements (26, 27, 28, 29) designed to be placed in earth orbit, comprising:
- a plurality of structural elements (26, 27, 28, 29) linked together by joints (232, 233), the assembly forming an articulated arm linked to a payload (30) by an attachment section,
- the joints (232, 233) comprising at least one pivot link allowing two consecutive structural elements (26, 27, 28, 29) to pivot relative to one another,
- the attachment section comprising a pivot link allowing the first structural element (26) to pivot relative to the payload (30),
- a locking/unlocking system (50, 51) comprising at least one locking device arranged on a joint (232, 233) allowing the locking of at least one pivot link,
- a coupling system comprising a first coupling mode allowing each of the structural elements (26, 27, 28, 29) to pivot according to a predefined rule of rotation,
- at least one motor (21) allowing the coupling system to be activated, said motor being positioned on a joint, designated the drive joint,
**characterised in that** the locking system (50, 51) allows the first coupling mode to be deactivated and a second coupling mode to be activated, the second coupling mode allowing the unlocking to be maintained of a pivot link of at least one joint, designated the pointing joint, the rotation of the motor (21) causing the rotation of the pointing joint.

2. The device for deploying and pointing structural elements (26, 27, 28, 29) designed to be placed in earth orbit according to claim 1, **characterised in that** the coupling system comprises:
- a plurality of pulleys (22, 23, 24, 25) linked by cables, one pulley (22) of which is activated by the motor, designated the drive pulley, and;
- means for attaching the pulleys (22, 23, 24, 25) to the structural elements (26, 27,28,29),
each joint comprising at least two pulleys (23, 23', 24, 24'), one of which (23, 24) is attached to an upstream structural element, designated the upstream pulley, and the other (23', 24') is attached to a downstream structural element, designated the downstream pulley, the attachment section comprising a pulley (22) that is attached to the first structural element (26).

3. The device for deploying and pointing structural elements (26, 27, 28, 29) designed to be placed in earth orbit according to any one of claims 1 to 2, **characterised in that** the locking/unlocking system (50, 51) comprises at least one device for locking/unlocking a coupling pulley relative to the joint.

4. The device for deploying and pointing structural elements (26, 27, 28, 29) designed to be placed in earth orbit according to claim 3, **characterised in that** the joint comprising the motor (21), as well as all of the joints located between the joint comprising the motor and the pointing joint, includes a device for locking/unlocking a pulley, the pointing joint (232) comprising a device for locking/unlocking a pulley solely on the downstream pulley.

5. The device for deploying and pointing structural elements (26, 27, 28, 29) designed to be placed in earth orbit according to any one of claims 3 to 4, **characterised in that** all of the joints have a device for locking/unlocking a pivot link of a joint, except for the pointing joint.

6. The device for deploying and pointing structural elements (26, 27, 28, 29) designed to be placed in earth orbit according to claim 5, **characterised in that** the engagement of the second coupling mode causes:
- the locking of a plurality of pivot links;
- the unlocking of the pulleys of each joint included between the joint comprising the motor, designated the drive joint, and the pointing joint;
- the locking of the upstream pulley of the pointing joint to be maintained;
- the unlocking of the downstream pulley of the pointing joint;
- the unlocking of the pivot link of the pointing joint to be maintained.

7. The device for deploying and pointing structural elements (26, 27, 28, 29) designed to be placed in earth orbit according to claim 6, **characterised in that** the engagement of the second coupling mode simultaneously causes:
- the locking of the pivot link of the drive joint;
- the unlocking of the drive pulley relative to the joint.

8. The device for deploying and pointing structural elements (26, 27, 28, 29) designed to be placed in earth orbit according to claim 3, **characterised in that** the device for locking/unlocking a pivot link of a joint comprises at least one ratchet (61) and one return spigot (64).

9. The device for deploying and pointing structural elements (26, 27, 28, 29) designed to be placed in earth orbit according to claim 3, **characterised in that** the device for locking the pivot link of the motor joint comprises at least one ratchet (61), one return spigot (64) and one retention arm (54).

10. The device for deploying and pointing structural elements (26, 27, 28, 29) designed to be placed in earth orbit according to claim 3, **characterised in that** the device for locking the pivot link of the pointing joint comprises a locking finger (65) allowing the pulley to be released at a determined angle.

11. The device for deploying and pointing structural elements (26, 27, 28, 29) designed to be placed in earth orbit according to any one of claims 1 to 10, **characterised in that** the structural elements (26, 27, 28, 29) comprise forks and solar generators.

12. The device for deploying and pointing structural elements (26, 27, 28, 29) designed to be placed in earth orbit according to any one of claims 1 to 11, **characterised in that** the motor (21) and the drive pulley are disposed on the attachment section.

## Patentansprüche

1. Vorrichtung zum Entfalten und Ausrichten von Strukturelementen (26, 27, 28, 29), die in eine Erdumlaufbahn gebracht werden sollen, die Folgendes umfasst:
- mehrere Strukturelemente (26, 27, 28, 29), die durch Gelenke (232, 233) miteinander verbunden sind, wobei die Baugruppe einen angelenkten Arm bildet, der durch einen Befestigungsabschnitt mit einer Nutzlast (30) verbunden ist;
- wobei die Gelenke (232, 233) wenigstens eine Drehverbindung aufweisen, so dass zwei konsekutive Strukturelemente (26, 27, 28, 29) relativ zueinander drehen können,
- wobei der Befestigungsabschnitt eine Drehverbindung aufweist, so dass das erste Strukturelement (26) in Bezug auf die Nutzlast (30) drehen kann;
- ein Ver-/Entriegelungssystem (50, 51), das wenigstens eine Verriegelungsvorrichtung aufweist, die an einem Gelenk (232, 233) angeordnet ist, das die Verriegelung von wenigstens einer Drehverbindung zulässt;
- ein Kopplungssystem mit einem ersten Kopplungsmodus, der das Drehen jedes der Strukturelemente (26, 27, 28, 29) gemäß einem vordefinierten Rotationsgesetz zulässt;
- wenigstens einen Motor (21), mit dem das Kopplungssystem aktiviert werden kann, wobei der Motor an einem Gelenk, Antriebsgelenk genannt, positioniert ist,
**dadurch gekennzeichnet, dass** das Verriegelungssystem (50, 51) die Deaktivierung des ersten Kopplungsmodus und die Aktivierung eines zweiten Kopplungsmodus zulässt, wobei der zweite Kopplungsmodus ermöglicht, die Entriegelung einer Drehverbindung von wenigstens einem Gelenk, Ausrichtgelenk genannt, beizubehalten, wobei die Rotation des Motors (21) eine Rotation des Ausrichtgelenks bewirkt.

2. Vorrichtung zum Entfalten und Ausrichten von Strukturelementen (26, 27, 28, 29), die in eine Erdumlaufbahn gebracht werden sollen, nach Anspruch 1, **dadurch gekennzeichnet, dass** das Kopplungssystem Folgendes umfasst:
- mehrere mit Seilen verbundene Scheiben (22, 23, 24, 25), wobei eine Scheibe (22), Antriebsscheibe genannt, durch den Motor aktiviert wird;
- Mittel zum Befestigen der Scheiben (22, 23, 24, 25) an den Strukturelementen (26, 27, 28, 29), wobei jedes der Gelenke wenigstens zwei Scheiben (23, 23', 24, 24') umfasst, von denen eine (23, 24) an einem stromaufwärtigen Strukturelement befestigt ist, stromaufwärtige Scheibe genannt, und die andere (23', 24') an einem stromabwärtigen Strukturelement befestigt ist, stromabwärtige Scheibe genannt, wobei der Befestigungsabschnitt eine Scheibe (22) umfasst, die an dem ersten Strukturelement (26) befestigt ist.

3. Vorrichtung zum Entfalten und Ausrichten von Strukturelementen (26, 27, 28, 29), die in eine Erdumlaufbahn gebracht werden sollen, nach einem der Ansprüche 1 bis 2, **dadurch gekennzeichnet, dass** das Ver-/Entriegelungssystem (50, 51) wenigstens eine Vorrichtung zum Ver-/Entriegeln einer Kopplungsscheibe in Bezug auf das Gelenk umfasst.

4. Vorrichtung zum Entfalten und Ausrichten von Strukturelementen (26, 27, 28, 29), die in eine Erdumlaufbahn gebracht werden sollen, nach Anspruch 3, **dadurch gekennzeichnet, dass** das Gelenk mit dem Motor (21) sowie alle Gelenke, die sich zwischen dem Gelenk mit dem Motor und dem Ausrichtgelenk befinden, eine Vorrichtung zum Ver-/Entriegeln einer Scheibe umfassen, wobei das Ausrichtgelenk (232) eine Vorrichtung zum Ver-/Entriegeln einer Scheibe nur an der stromabwärtigen Scheibe umfasst.

5. Vorrichtung zum Entfalten und Ausrichten von Strukturelementen (26, 27, 28, 29), die in eine Erdumlaufbahn gebracht werden sollen, nach einem der Ansprüche 3 bis 4, **dadurch gekennzeichnet, dass** alle Gelenke eine Vorrichtung zum Ver-/Entriegeln einer Drehverbindung eines Gelenks mit Ausnahme des Ausrichtgelenks haben.

6. Vorrichtung zum Entfalten und Ausrichten von Strukturelementen (26, 27, 28, 29), die in eine Erdumlaufbahn gebracht werden sollen, nach Anspruch 5, **dadurch gekennzeichnet, dass** das Einkuppeln des zweiten Kopplungsmodus Folgendes beinhaltet:
- das Verriegeln mehrerer Drehverbindungen;
- das Entriegeln der Scheiben jedes Gelenks zwischen dem Gelenk mit dem Motor, Antriebsgelenk genannt, und dem Ausrichtgelenk;
- Beibehalten der Verriegelung der stromaufwärtigen Scheibe des Ausrichtgelenks;
- Entriegeln der stromabwärtigen Scheibe des Ausrichtgelenks;
- Beibehalten der Entriegelung der Drehverbindung des Ausrichtgelenks.

7. Vorrichtung zum Entfalten und Ausrichten von Strukturelementen (26, 27, 28, 29), die in eine Erdumlaufbahn gebracht werden sollen, nach Anspruch 6, **dadurch gekennzeichnet, dass** das Einkuppeln des zweiten Kopplungsmodus gleichzeitig Folgendes beinhaltet:
- Verriegeln der Drehverbindung des Antriebsgelenks;
- Entriegeln der Antriebsscheibe in Bezug auf das Gelenk.

8. Vorrichtung zum Entfalten und Ausrichten von Strukturelementen (26, 27, 28, 29), die in eine Erdumlaufbahn gebracht werden sollen, nach Anspruch 3, **dadurch gekennzeichnet, dass** die Vorrichtung zum Ver-/Entriegeln einer Drehverbindung eines Gelenks wenigstens eine Klinke (61) und eine Umkehrnase (64) umfasst.

9. Vorrichtung zum Entfalten und Ausrichten von Strukturelementen (26, 27, 28, 29), die in eine Erdumlaufbahn gebracht werden sollen, nach Anspruch 3, **dadurch gekennzeichnet, dass** die Vorrichtung zum Verriegeln der Drehverbindung des Motorgelenks wenigstens eine Klinke (61), eine Umkehmase (64) und einen Haltearm (54) umfasst.

10. Vorrichtung zum Entfalten und Ausrichten von Strukturelementen (26, 27, 28, 29), die in eine Erdumlaufbahn gebracht werden sollen, nach Anspruch 3, **dadurch gekennzeichnet, dass** die Vorrichtung zum Verriegeln der Drehverbindung des Ausrichtgelenks einen Verriegelungszapfen (65) umfasst, der die Freisetzung der Scheibe in einem vorbestimmten Winkel zulässt.

11. Vorrichtung zum Entfalten und Ausrichten von Strukturelementen (26, 27, 28, 29), die in eine Erdumlaufbahn gebracht werden sollen, nach einem der Ansprüche 1 bis 10, **dadurch gekennzeichnet, dass** die Strukturelemente (26, 27, 28, 29) Gabeln und Solargeneratoren umfassen.

12. Vorrichtung zum Entfalten und Ausrichten von Strukturelementen (26, 27, 28, 29), die in eine Erdumlaufbahn gebracht werden sollen, nach einem der Ansprüche 1 bis 11, **dadurch gekennzeichnet, dass** der Motor (21) und die Antriebsscheibe auf dem Befestigungsabschnitt angeordnet sind.
